# EUROPÄISCHE PATENTSCHRIFT

(11) **EP 2 164 339 B1**
(45) Veröffentlichungstag und Bekanntmachung des Hinweises auf die Patenterteilung: **20.08.2014**
(21) Anmeldenummer: 08733828.1
(22) Anmeldetag: 05.05.2008
(51) Int. Cl.: A23G 1/00, A23G 1/36, A23G 1/40

(54) **VERFAHREN ZUR HERSTELLUNG EINER FETTMASSE**
METHOD OF PRODUCING A FAT COMPOSITION
PROCÉDÉ DE FABRICATION D'UNE MATIÈRE GRASSE

(30) Priorität: 22.06.2007 DE 102007029221
(43) Veröffentlichungstag der Anmeldung: 24.03.2010
(73) Patentinhaber: Bühler AG, 9240 Uzwil (CH)
(72) Erfinder: BRAUN, Peter, 8280 Kreuzlingen (DE); SCHMIDT, Bernd, CH-9533 Kirchberg (CH); ZIEGLER, Andreas, CH-9244 Niederuzwil (CH); STAUBLI, Erich, CH-9230 Flawil (CH)
(74) Vertreter: Hepp Wenger Ryffel AG
(86) Internationale Anmeldenummer: PCT/CH2008/000202
(87) Internationale Veröffentlichungsnummer: WO 2009/000093

(56) Entgegenhaltungen:
- EP-A- 0 033 718
- EP-A- 0 393 327
- EP-A- 0 500 182
- EP-A- 0 832 567
- EP-A- 1 673 977
- WO-A-00/32057
- WO-A-93/12664
- WO-A-2004/112491
- JP-A- 5 064 545
- JP-A- 6 030 699
- JP-A- 60 027 339
- NL-A- 8 004 633

## Beschreibung

Die Erfindung bezieht sich auf ein Verfahren zur Herstellung einer fetthaltigen Suspension bzw. einer fetthaltigen Emulsion, insbesondere einer Schokolade oder einer schokoladeähnlichen Fettmasse.

Bei der Herstellung von wasserhaltigen Schokoladen kommt es bisher immer zum Problem der Anlösung des Zuckers bzw. des Milchpulvers. Dies führt zu einem Nachdicken der Schokolade bzw. geringer Lagerstabilität.

Agavesirup ist eine konzentrierte Zuckerlösung, mehrheitlich bestehend aus Fructose und ihren Oligomeren. Agavesirup wird biologisch gewonnen und eignet sich zur Herstellung von Bioschokoladen.

Aus EP 1673977 ist ein Verfahren zur Herstellung von wärmeresistenter Schokolade bekannt, bei dem konventionell getemperte Schokoladenmasse mit einer Wasser-Öl-Emusion gemischt wird. Die Emulsion wird bei einer Temperatur zwischen 30°C und 70°C gebildet und es kann ein Emulgator, wie PGPR, hinzugefügt sein. Die Emulsion hat einen Wassergehalt von 1.5-7%.

In WO0032057 ist ein Verfahren zur Herstellung eines fettbasierten schmelzbaren Verzehrprodukts gezeigt, bei welchem zunächst eine Kakaobutter-Wasser-Emulsion hergestellt wird, die danach zu einer getemperten Milchschokolade gegeben wird. Der endgültige Wassergehalt liegt bei 1.2%.

EP0393327 offenbart ein Verfahren zur Herstellung von wärmeresistenter Schokolade, bei welchem eine Zuckerlösung bei 20°C oder 30°C mit einem Fett emulgiert wird und anschliessend die Emulsion mit einer getemperten Schokolade vermischt wird. Die Emulsion hat einen Wassergehalt zwischen 15% und 25%.

In WO9312664 ist ein Verfahren zur Herstellung von wärmeresistenter Schokolade offenbart, bei welcher eine Schokoladenmasse mit einer Wasser-Öl-Mikroemulsion gemischt wird, die eine Wassertröpfchengrösse zwischen 10 und 1000 Å aufweist. Dabei werden Emulsionen mit einem Wassergehalt von 15% verwendet.

EP0832567 zeigt ein Verfahren zur Herstellung wasserenthaltender Schokolade, wobei zunächst eine Wasser-Kakaobutter-Emulsion bei 45°C hergestellt wird, die anschliessend mit einer Fettmasse, z.B. einer Schokolade gemischt wird. Der Wassergehalt der Emulsion liegt zwischen 10% und 80%, bevorzugt zwischen 40% und 70%.

Aus NL 8004633 ist ein Verfahren bekannt, bei dem eine Kakaomasse, Zucker, Kakaobutter, Milchpulver und Wasser bei einer Temperatur zwischen 40°C und 60°C einem Druck zwischen 0.1995 bar und 0.3325 bar emulgiert werden.

In JP 05064545 ist ein Verfahren zum Herstellen einer Schokolade gezeigt, bei welchem zunächst Wasser mit einem Diglycerid enthaltenen Fett emulgiert wird.

EP 0033718 zeigt eine Verfahren zum Herstellen wärmeresistenter Schokolade, bei dem zunächst eine Wasser-Kakaobutter Emulsion mit einem Wasseranteil zwischen 30 und 80 % hergestellt wird.

JP60027339 offenbart ein Verfahren zum Herstellen einer Schokolade, bei welchem zunächst Wasser mit Fett und einem Polyglycerin Fettsäure-Ester und/oder "polyglycerin condensed recinoleic acid ester" emulgiert wird.

EP 0500182 offenbart ein streichfähiges Verzehrprodukt, dass einen Wasser-Öl-Emulsion enthält.

JP 06030699 zeigt die Herstellung einer Wasser-Öl-Emulsion, der ein Emulgator beigefügt ist.

Der Erfindung liegt die Aufgabe zugrunde, eine Schokolade oder ein schokoladeähnliches Produkt bestehend aus Agavesirup und oder einer anderen polysaccharidhaltigen wässrigen Lösung und Kakaomasse sowie evtl. Milchpulver herzustellen.

Gemäss der Erfindung wird diese Aufgabe gelöst durch ein Verfahren zur Herstellung einer fetthaltigen Suspension "bzw. einer fetthaltigen Emulsion", insbesondere einer Schokolade oder einer schokoladeähnlichen Fettmasse, durch Mischen einer mittels reaktiver Emulgiertechnik gebildeten Emulsion, die eine disperse wässrige Phase und eine kontinuierliche Fettphase aufweist, mit einer Fettphase, insbesondere einer Kakaomasse.

Mit "fetthaltiger Suspension" oder "fetthaltigen Emulsion" wird hier die Masse nach dem Mischvorgang bezeichnet, also die "Dispersion" mehr oder weniger fester Partikel in einer kontinuierlichen Fettphase. Die diskontinuierliche Phase kann a) nur flüssige Partikel aufweisen, wie z.B. Wassertröpfchen mit gelöstem Polysaccharid, oder b) sie kann flüssige und feste Partikel aufweisen, wie z.B. Wassertröpfchen mit gelöstem Polysaccharid, feste Partikel aus Kakao und/oder Polysaccharid, oder sie kann nur feste Partikel aufweisen, wie z.B. hochkonzentrierte und daher hoch viskose Tröpfchen aus Polysaccharid-Lösung, die hier als "halbfester Zustand" bezeichnet werden.

Die Erfindung bezieht sich insbesondere auf ein Verfahren zur Herstellung agavesiruphaltiger Schokolade, wobei eine Emulsion bestehend aus Kakaobutter oder einem anderen Fett oder Fettgemisch und Agavesirup und/oder einer anderen polysaccharidhaltigen wässrigen Lösung erzeugt und mit Kakaomasse vermischt wird. Erfindungsgemäss erfolgt die Stabilisierung der Emulsion und später der Schokolade durch Emulgierung bei erhöhter Temperatur und Eindampfen des Agavesirups und/oder einer anderen polysaccharidhaltigen wässrigen Lösung im emulgierten Zustand. Eine sonst übliche Zerkleinerung der Trockenstoffe ist somit nicht mehr notwendig, da die sensorisch notwendige Feinheit durch den Emulgierprozess eingestellt wird.

Die Erfindung liefert auch ein Verfahren zur Herstellung einer Emulsion, die eine disperse wässrige Phase und eine kontinuierliche Fettphase aufweist, wobei die Emulsion unter erhöhten Temperaturen zum Zwecke der Angleichung der Viskositätsverhältnisse von disperser zur kontinuierlicher Phase im Bereich 30 bis 120°C, vorzugsweise 50 bis 80°C gebildet wird.

Die Erfindung liefert ausserdem ein Verfahren zur Herstellung einer Emulsion, die eine disperse wässrige Phase und eine kontinuierliche Fettphase aufweist, mittels reaktiver Emulgiertechnik, wobei anschliessend zu der Emulgierung der Trockenstoffgehalt der dispersen Phase durch Eindampfung unter atmosphärischen oder reduzierten Druckbedingungen im Bereich 0,1 bis 1 bar erhöht wird.

Die Erfindung sieht vor, dass hochkonzentrierte Zuckerlösungen in Kakaobutter und oder einem anderen Fett bei erhöhten Temperaturen emulgiert und derart bearbeitet werden, dass die disperse Zuckerphase der Emulsion bei Raumtemperatur im übersättigten Zustand vorliegt und die Tropfen somit im festen bis halbfesten Zustand vorliegen.

Diese so stabilisierte Emulsion wird anschliessend mit einer je nach Wunsch vorbehandelten und auf Endfeinheit vermahlenen Kakaomasse vermischt und somit die fertige Schokolade erzeugt.

Vorzugsweise werden Emulgatoren wie PGPR, SPAN, TWEN im Bereich von 0.2 bis 10 Gew.% bezogen auf die Emulsion verwendet.

Vorzugsweise wird die fetthaltige Suspension bzw. fetthaltige Emulsion durch Mischen einer Fettphase mit einer oder mehreren Emulsionen gebildet.

Vorzugsweise werden in der dispersen wässrigen Phase der Emulsion Milchpulver und/oder Proteine und/oder Mono-, und/oder Di-, und/oder Polysaccharide und/oder Hydrokolloide gelöst.

Bei einer besonders bevorzugten Ausführung wird Agavesirup als disperse Phase verwendet.

Vorzugsweise wird während des Verfahrens gezielt karamellisiert.

Vorzugsweise wird der Emulsion, den Emulsionen und/oder der Fettmasse vor der Mischung Emulgator zugegeben.

Vorzugsweise wird der fetthaltigen Phase, z.B. Kakaomasse, vor der Mischung mit der Emulsion durch Zentrifugation und/oder Filtration das Fett abgetrennt. Dieses abgetrennte Fett kann zur Herstellung der Emulsion eingesetzt und somit der Gesamtfettgehalt des fertigen Produktes reduziert werden.

Vorzugsweise werden die Emulsion oder die Emulsionen kontinuierlich und oder absatzweise hergestellt.

Vorzugsweise befindet sich die Emulgiereinrichtung (Rotor/Stator-System) bei absatzweisem Betrieb im Tank oder ausserhalb des Tanks, und die Emulsion kann diese ein- oder mehrfach durchströmen und wird in den Tank rückgeführt.

Zur Herstellung dieser Emulsion ist es notwendig, dass die disperse Phase, hier die wässrige Lösung, und kontinuierliche Phase, hier die geschmolzene Fettphase, Viskositätsverhältnisse bis 5:1 vorweisen. Durch Emulgieren im Temperaturbereich zwischen 30° und 120°C kann die Viskosität der dispersen Phase entsprechend weit abgesenkt werden. Die Verwendung von Emulgatoren, beispielsweise PGPR oder TWEN oder SPAN unterstützen die Emulsionsbildung. Emulgiert wird in handelsüblichen Rotor/Stator-Systemen. Im Anschluss zur Emulgierung erfolgt die Eindampfung der dispersen Phase. Die Eindampfung kann unter Vakuum oder atmosphärisch erfolgen. Die disperse Phase wird dabei auf Wassergehalte von 0 bis 40% eingedampft und so die Übersättigung erreicht. Unterstützend kann Säure hinzugegeben werden um durch Hydrolyse des Zuckers eine weitere Wasserabsenkung herbeizuführen. Es handelt sich damit um ein reaktives Emulgierverfahren.

Erweiternd kann die wässrige Phase noch mit Protein und oder Mono-, Di- Polysacchariden und oder Milchpulver und oder Hydrokolloiden angereichert oder gebildet werden. Eine Bildung von multiplen Emulsionen oder eine Mischung mit ein und/oder mehreren Emulsionen ist ebenfalls möglich.

Die so stabilisierte Emulsion wird dann mit der Kakaomasse und/oder einer anderen Fettmasse vermischt.

Eine Zerkleinerung der Trockenstoffe ist somit nicht mehr notwendig, da die sensorisch notwendige Feinheit durch den Emulgierprozess eingestellt wird.

Zur guten Kristallisation der Mischung ist es notwendig, diese vorzukristallieren. Dazu können entweder die Emulsion und/oder die Kakaomasse und/oder Fettmasse vor der Vermischung vorkristallistert werden. Ebenso ist es möglich, auch im gemischten Zustand durch Zugabe von Kristalikeimen die Vorkristallisation vorzunehmen.

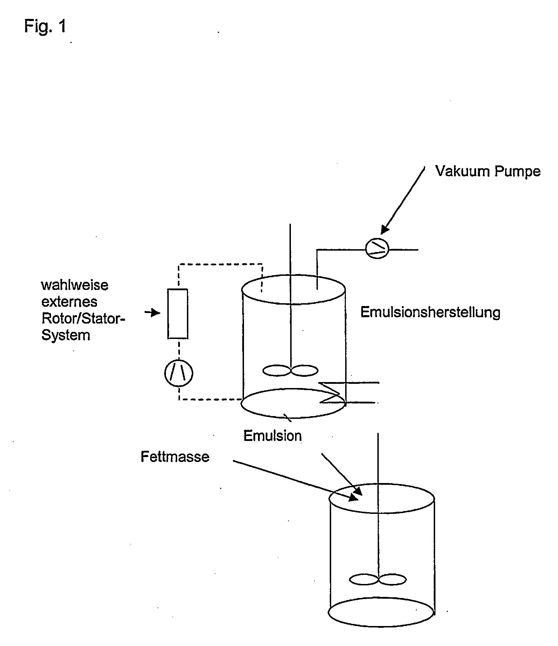

## Patentansprüche

1. Verfahren zur Herstellung von einer Schokolade oder einem schokoladeähnlichen Produkt, mit den folgenden Verfahrensschritten
- Bilden einer Emulsion aus disperser wässriger Phase, nämlich einem Agavesirup und/oder einer anderen polysaccharidhaltigen wässrigen Lösung, und kontinuierlicher Fettphase, insbesondere Kakaobutter, mittels reaktiver Emulgiertechnik, wobei die Emulsion unter erhöhten Temperaturen zum Zwecke der Angleichung der Viskositätsverhältnisse von disperser Phase zur kontinuierlichen Phase im Bereich 30 bis 120°C, vorzugsweise 50 bis 80°C gebildet wird, wobei die Viskosität der dispersen Phase soweit abgesenkt wird, dass die disperse Phase und die kontinuierliche Phase Viskositätsverhältnisse bis 5:1 vorweisen,
- wobei im Anschluss zur_Emulgierung die disperse wässrige Phase auf Wassergehalte von 0% bis 40% eingedampft wird, wobei der Trockenstoffgehalt der dispersen Phase durch Eindampfung unter atmosphärischen oder reduzierten Druckbedingungen im Bereich 0,1 bis 1 bar erhöht wird, und so Übersättigung erreicht;
- Mischen der Emulsion mit Fettphase, insbesondere Kakaomasse

2. Verfahren nach Anspruch 1 **dadurch gekennzeichnet, dass** der Emulsion, den Emulsionen und/oder der Fettmasse vor der Mischung Emulgator zugegeben wird, insbesondere unter Verwendung von Emulgatoren wie PGPR, SPAN, TWEN im Bereich von 0.2 bis 10 Gew.-% bezogen auf die Emulsion.

3. Verfahren nach Anspruch 1, **dadurch gekennzeichnet, dass** die fetthaltige Suspension bzw. fetthaltige Emulsion durch Mischen einer Fettphase mit einer oder mehreren Emulsionen gebildet wird.

4. Verfahren nach einem der vorhergehenden Ansprüche, **dadurch gekennzeichnet, dass** in der dispersen wässrigen Phase der Emulsion Milchpulver und/oder Proteine und/oder Mono-, und/oder Di-, und/oder Polysaccharide und/oder Hydrokolloide gelöst werden.

5. Verfahren nach einem der vorhergehenden Ansprüche, **dadurch gekennzeichnet, dass** während des Verfahrens gezielt karamellisiert wird.

6. Verfahren nach einem der vorhergehenden Ansprüche mit vorausgehender Abtrennung von Fett in der fetthaltigen Phase, z.B. Kakaomasse, insbesondere dass die Abtrennung von Fett von der fetthaltigen Phase durch Zentrifugation und/oder Filtration erfolgt, bevorzugt durch vorgängige Zugabe von Wasser, wobei insbesondere das abgetrennte Fett zur Herstellung der Emulsion vollständig oder teilweise eingesetzt wird.

7. Verfahren nach der vorhergehenden Ansprüche, **dadurch gekennzeichnet, dass** eine im Fettgehalt reduzierte Fettphase, z.B. teilentfettete Kakaomasse, mit der Emulsion gemischt wird.

8. Verfahren nach der vorhergehenden Ansprüche, **dadurch gekennzeichnet, dass** die Fettphase und/oder die Emulsionsphase vor der Vermischung vorkristallisiert werden, insbesondere mittels Zugabe von Kristallisationskeimen.

## Claims

1. Method of producing a chocolate or a chocolate-like product, having the following method steps
- forming an emulsion from a disperse aqueous phase, namely an agave syrup and/or another aqueous solution containing polysaccharides, and a continuous fat phase, in particular cocoa butter, using a reactive emulsifying technique, wherein the emulsion is formed at elevated temperatures for the purpose of adjusting the viscosity ratios of disperse phase to continuous phase in the range 30 to 120°C, preferably 50 to 80°C, wherein the viscosity of the disperse phase is reduced to such an extent that the disperse phase and the continuous phase exhibit viscosity ratios up to 5:1,
- wherein subsequently to the emulsification, the disperse aqueous phase is evaporated to water contents of 0% to 40% wherein the dry matter content of the disperse phase is increased by evaporation under atmospheric or reduced pressure conditions in the range 0.1 to 1 bar and supersaturation is thus achieved;
- mixing the emulsion with the fat phase, in particular cocoa mass.

2. Method according to Claim 1, **characterized in that** emulsifier is added to the emulsion, to the emulsions and/or to the fat composition before mixing, in particular using emulsifiers such as PGPR, SPAN, TWEN in the range from 0.2 to 10% by weight, based on the emulsion.

3. Method according to Claim 1, **characterized in that** the fat-containing suspension or fat-containing emulsion is formed by mixing a fat phase with one or more emulsions.

4. Method according to any one of the preceding claims, **characterized in that** milk powder and/or proteins and/or mono- and/or di- and/or polysaccharides and/or hydrocolloids are dissolved in the disperse aqueous phase of the emulsion.

5. Method according to any one of the preceding claims, **characterized in that** targeted caramelization is performed during the method.

6. Method according to any one of the preceding claims with prior separation of fat in the fat-containing phase, e.g. cocoa mass, in particular in that the fat is separated off from the fat-containing phase by centrifugation and/or filtration, preferably by prior addition of water, wherein in particular the fat which is separated off is used in whole or in part for producing the emulsion.

7. Method according to the preceding claims, **characterized in that** a fat phase which is reduced in fat content, e.g. partially defatted cocoa mass, is mixed with the emulsion.

8. Method according to the preceding claims, **characterized in that** the fat phase and/or the emulsion phase are precrystallized before the mixing, in particular by adding crystallization nuclei.

## Revendications

1. Procédé pour la fabrication d'un chocolat ou d'un produit ressemblant à du chocolat, comprenant les étapes suivantes de processus
- formation d'une émulsion à base de phase aqueuse dispersée, à savoir d'un sirop d'agave et/ou d'une autre solution aqueuse contenant des polysaccharides, et d'une phase lipidique continue, en particulier de beurre de cacao, au moyen d'une technique d'émulsification réactive, l'émulsion étant formée à des températures élevées dans le but de l'adaptation des rapports de viscosité de la phase dispersée à la phase continue, dans la plage de 30 à 120 °C, de préférence de 50 à 80 °C, la viscosité de la phase dispersée étant abaissée jusqu'à ce que la phase dispersée et la phase continue présentent des rapports de viscosité valant jusqu'à 5:1,
- à la suite de l'émulsification la phase aqueuse dispersée étant évaporée jusqu'à des teneurs en eau de 0 % à 40 %,la teneur en matière sèche de la phase dispersée étant augmentée par évaporation dans des conditions de pression atmosphérique ou réduite se situant dans la plage de 0,1 à 1 bar, et une sursaturation étant ainsi atteinte ;
- mélange de l'émulsion avec une phase lipidique, en particulier une masse de cacao.

2. Procédé selon la revendication 1, **caractérisé en ce qu'**avant le mélange on ajoute à l'émulsion, aux émulsions et/ou à la matière grasse un émulsifiant, en particulier en utilisant des émulsifiants tels que PGPR, SPAN, TWEN dans la plage de 0,2 à 10 % en poids, par rapport à l'émulsion.

3. Procédé selon la revendication 1, **caractérisé en ce que** la suspension contenant des graisses ou l'émulsion contenant des graisses est formée par mélange d'une phase lipidique avec une ou plusieurs émulsions.

4. Procédé selon l'une quelconque des revendications précédentes, **caractérisé en ce qu'**on dissout dans la phase aqueuse dispersée de l'émulsion du lait en poudre et/ou des protéines et/ou des mono-, et/ou di-, et/ou polysaccharides et/ou des hydrocolloïdes.

5. Procédé selon l'une quelconque des revendications précédentes, **caractérisé en ce que** pendant le processus on effectue une caramélisation voulue.

6. Procédé selon l'une quelconque des revendications précédentes, avec séparation préalable de matière grasse dans la phase contenant des graisses, masse de cacao par exemple, la séparation de la matière grasse d'avec la phase contenant des graisses s'effectuant en particulier par centrifugation et/ou filtration, de préférence par addition préalable d'eau, la matière grasse séparée étant en particulier utilisée en partie ou en totalité pour la préparation de l'émulsion.

7. Procédé selon les revendications précédentes, **caractérisé en ce qu'**on mélange avec l'émulsion une phase lipidique à teneur réduite en matières grasses, par exemple une masse de cacao partiellement dégraissée.

8. Procédé selon les revendications précédentes, **caractérisé en ce qu'**avant le mélangeage on fait pré-cristalliser la phase lipidique et/ou la phase d'émulsion, en particulier par addition de germes de cristallisation.
